(19)

Europäisches
Patentamt
European
Patent Office
Office européen
des brevets

(11) **EP 2 429 203 A2**

(12) **EUROPEAN PATENT APPLICATION**

(43) Date of publication:
**14.03.2012 Bulletin 2012/11**

(51) Int Cl.:
***H04N 13/00*** *(2006.01)*

(21) Application number: **11180267.4**

(22) Date of filing: **06.09.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **10.09.2010 GB 1015089**

(71) Applicant: **Snell Limited
Berkshire RG6 4PB (GB)**

(72) Inventor: **Diggins, Joe
Chesham, Buckinghamshire HP5 1YQ (GB)**

(74) Representative: **Garratt, Peter Douglas et al
Mathys & Squire LLP
120 Holborn
London
EC1N 2SQ (GB)**

(54) **Detecting stereoscopic images**

(57) To detect the presence of the two constituent images of a stereoscopic image within an image frame, a row of vertically-averaged pixels is derived from the upper half of the frame and compared with a second row of vertically-averaged pixels derived from the lower half of the frame. Similarly, a column of horizontally-averaged pixels is derived from the left half of the frame and compared with a column of horizontally-averaged pixels derived from the right half of the frame.

**Figure 2**

EP 2 429 203 A2

## Description

### FIELD OF INVENTION

This invention concerns monitoring of video material to detect the presence of stereoscopic images.

### BACKGROUND OF THE INVENTION

There is increasing interest in stereoscopic television, in which a pair of images of the same scene from closely-spaced, horizontally-adjacent viewpoints are respectively presented to the left and right eyes of a viewer so as to obtain a 'three dimensional' image. One popular way of using existing transmission equipment to deliver stereoscopic images is to divide each frame into two halves and to use one half-frame for the left-eye image, and the other half-frame for the right-eye image. If the frame is divided horizontally, the horizontal scale of the two images is (approximately) halved; alternatively, if the frame is divided vertically, the vertical scale is (approximately) halved. The rescaling is, of course, reversed prior to display of the image.

This modified use of a transmission system requires careful monitoring and control to avoid presenting double images to 2D viewers, or simultaneously presenting different parts of the same image to the left and right eyes of stereoscopic viewers. There is thus great commercial utility for a system that processes image files or data and determines whether conventional two-dimensional images are being distributed, or whether, and in what manner, two component images of a stereoscopic image are being sent in the same frame. It is particularly helpful if image files or data can be monitored in this way whenever they are processed or transmitted. Therefore it is highly beneficial for the method of monitoring, and the monitoring apparatus, to be simple and inexpensive, so that the monitoring process can be included at many points in a transmission chain without undue additional cost.

### SUMMARY OF THE INVENTION

The invention consists in one aspect in a method and apparatus for detecting the presence of the two constituent images of a stereoscopic image within an image frame by analysis of columns of horizontally-averaged pixel values and rows of vertically-averaged pixel values.

In a preferred embodiment, the ordered set of values of a row of vertically-averaged pixels is analysed to detect the similarity of average values corresponding to respective image regions within the said frame horizontally separated by half the width of the said frame and the presence of a side-by-side arrangement of constituent images of a stereoscopic image is inferred from said similarity.

Suitably, the ordered set of values of a column of horizontally-averaged pixels is analysed to detect the similarity of average values corresponding to respective image regions within the said frame vertically separated by half the height of the said frame and the presence of over-and-under arrangement of constituent images of a stereoscopic image is inferred from said similarity.

Advantageously, the average difference between members of a set of a row or column of averaged pixel values is evaluated.

In some embodiments the correlation between the members of a set of a row or column of averaged pixel values is evaluated, and phase correlation may be used.

In an alternative embodiment a first row of vertically-averaged pixels is derived from the upper half of the said frame and compared with a second row of vertically-averaged pixels derived from the lower half of the said frame and the presence of over-and-under arrangement of constituent images of a stereoscopic image is inferred when these first and second rows of vertically-averaged pixels are found to be similar.

Suitably, a first column of horizontally-averaged pixels is derived from the left half of the said frame and compared with a second column of horizontally-averaged pixels derived from the right half of the said frame and the presence of side-by-side arrangement of constituent images of a stereoscopic image is inferred when these first and second rows of vertically-averaged pixels are found to be similar.

Advantageously, the average difference between respective members of a pair of rows of averaged pixels or between respective member of a pair of columns of averaged pixels is evaluated.

Alternatively, the correlation between two rows of averaged pixels or between two columns of averaged pixels is evaluated, and phase correlation may be used.

In preferred embodiments a measure of similarity between pixel values or combinations of pixel values is biased in the direction of dissimilarity when a measure of the range of values within a row or column of pixel values or combinations of pixel values is small.

In some embodiments pixels close to the edge of the said frame or close to the vertical centre line, or horizontal centre line of the said frame are disregarded.

BRIEF DESCRIPTION OF THE DRAWINGS

An example of the invention will now be described with reference to the drawings in which:

Figure 1 shows defined regions of an exemplary image frame.
Figure 2 shows a block diagram of a process according to an embodiment of the invention.

DETAILED DESCRIPTION OF THE INVENTION

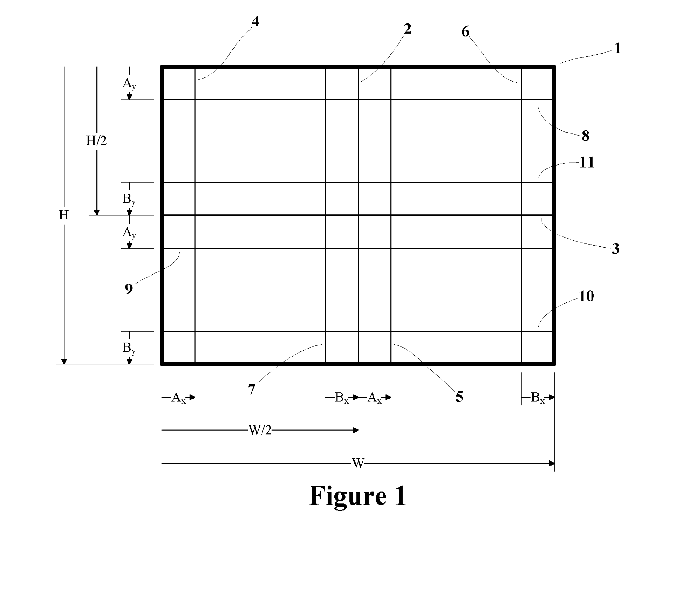

An exemplary image frame (1) is shown in Figure 1. The frame has a width of W horizontal pixel pitches, and a height of H vertical pixel pitches. It is therefore comprised of W x H pixels each having a value (for a particular image attribute) $P(x, y)$, where x and y are pixel position co-ordinates, in units of horizontal and vertical pixel pitches respectively, relative to a co-ordinate origin at the top left corner of the frame. Note that the y co-ordinate increases with distance down the frame, as this is the conventional direction of raster scan.

If the frame (1) is used to carry two constituent images of a stereoscopic image in 'side-by-side' format, then the portion of the frame to the left of the vertical centre-line (2) will carry one constituent image, and the portion of the frame to the right of the vertical centre-line (2) will carry the other constituent image. Alternatively, if two constituent images are carried in 'over-and-under' format, then the portion of the frame above the horizontal centre-line (3) will carry one constituent image, and the portion of the frame below the horizontal centre-line (3) will carry the other constituent image.

Figure 1 also shows the boundaries of image-edge regions that will be ignored in certain processing that will be described below. The line (4) corresponds to the inner edge of a left-edge region, $A_x$ horizontal pixel-pitches wide; and, the line (5) corresponds to the inner edge of the left-edge region of an image occupying the right-hand half of the frame. The inner boundaries of equivalent right-edge regions, $B_x$ horizontal pixel-pitches wide, for the frame and the left-hand half of the frame, are shown by the lines (6) and (7) respectively.

The boundaries of equivalent top-edge regions, $A_y$ vertical pixel-pitches wide, for the frame and the bottom half of the frame are shown by the lines (8) and (9) respectively. And, the boundaries of equivalent bottom-edge regions, $B_y$ vertical pixel-pitches wide, for the frame and the bottom half of the frame are shown by the lines (10) and (11) respectively.

Although the two constituent images of a 'stereo pair' of images are taken from different viewpoints, the close proximity of these viewpoints results in significant similarity between the respective images. The identification of stereoscopic material is thus possible by evaluating the correlation between the pixel values of the left and right sides of the frame, and the correlation between the pixel values of the top and bottom halves of the frame. However, the calculation of two-dimensional cross-correlation functions, possibly requiring multi-dimensional transforms of sets of pixel values, requires significant processing resources. This approach is generally not cost-effective when monitoring large numbers of video data streams or files at many points in a distribution chain.

The inventor has appreciated that over-and-under and side-by-side stereoscopic material can be identified by simple processing applied to one or two rows of vertically averaged pixel values and one or two columns of horizontally averaged pixel values derived from each frame.

A suitable row, that is representative of the horizontal variation of pixel values, and comprises W values is given by:

$$R(x) = (1/H) \times \Sigma P(x, y) \qquad\qquad [1]$$

Where: H is the height of the frame in vertical pixel pitches;
$P(x,$ y) is the value of the pixel at Cartesian co-ordinates $(x, y)$; and, the summation is made over the full frame height comprising the range $0 \leq y \leq (H\text{ -}1)$.

A suitable column, that is representative of the vertical variation of pixel values, and comprises H values is given by:

$$C(y) = (1/W) \times \Sigma P(x, y) \qquad\qquad [2]$$

Where: W is the width of the frame in horizontal pixel pitches; and,

The summation is made over the full frame width comprising the range $0 \leq X \leq (W - 1)$.

Note that, in each case, the division by the height or width respectively gives similarity in the number range to be processed regardless of the size of the frame.

One method of detecting constituent images of a stereoscopic image is to evaluate two, one-dimensional cross-correlation parameters:

(a) the cross-correlation between the ordered set of horizontally averaged pixel values taken from the top half of the frame, above the horizontal centre line (3), and the corresponding ordered set of horizontally-averaged pixel values taken from the bottom half of the frame, below the horizontal centre line (3); and,

(b) the cross-correlation between the ordered set of vertically averaged pixel values taken from the left half of the frame, to the left of the vertical centre line (2), and the corresponding ordered set of vertically-averaged pixel values taken from the right half of the frame, to the right of the vertical centre line (2).

If only one of these two cross-correlation evaluations returns a high measure of correlation, then over-and-under carriage of stereo can be detected if measure (a) is high and measure (b) is low; and, side-by-side carriage of stereo can be detected if measure (b) is high and measure (a) is low. If neither measure shows high correlation, then the absence of stereoscopic component images can be detected.

The correlation can be evaluated mathematically from the known cross-correlation integral, derived either: in the spatial domain by convolution of the two sets of pixel values taken from different halves of the image; or, in the frequency domain from respective one-dimensional transforms of the sets of pixel values. A suitable frequency domain technique is the known method one-dimensional phase-correlation where the phases of respective frequency components are compared and the set of phase differences is transformed from the frequency domain back to the spatial domain and analysed to detect peaks.

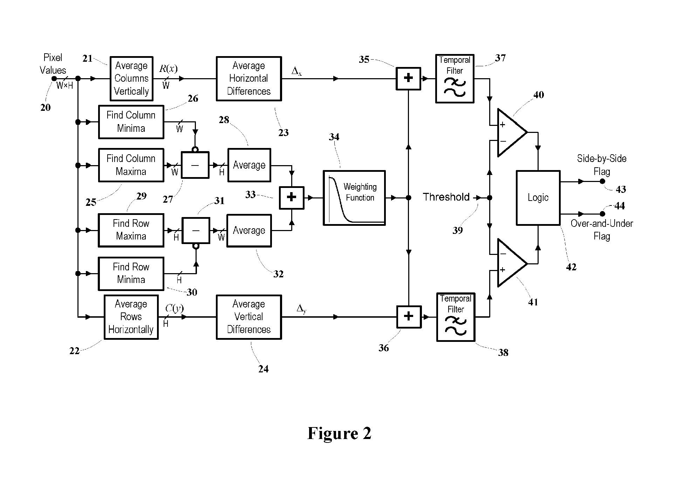

Alternatively pixel-value differences can be evaluated to detect correlation between halves of the frame. This is much simpler than the above correlation methods and therefore more cost effective for a system that requires many different image files or streams to be monitored at many different locations. A system using this principle to analyse an array of pixel values to detect the presence of two component images of a stereo pair is shown in Figure 2. A set of pixel values is input to the system at terminal (20). The set comprises H horizontal rows of W pixels, and W vertical columns of H pixels, making a total of W x H pixel values.

Vertical columns of pixel values are respectively averaged according to equation

[1] above by an averager (21) to give a row of W average values R(x). And, horizontal rows of pixel values are respectively averaged according to equation

[2] above by a second averager (22) to give a column of H average values C(y).

The magnitudes of the differences between pairs of values from the row of average values R(x) that are separated by half the image width are evaluated and averaged in a horizontal difference averager (23) according to equation [3] below:

$$\Delta_x = G \times \Sigma\{R(x) - R(x + W/2)\} \div (W/2 - A_x - B_x + 1) \qquad [3]$$

Where: $\Delta_x$ is an average horizontal-difference measure;
G is a constant chosen to give a convenient number range;
The summation is made over the range: $A_x \leq X \leq (W/2 - B_x - 1)$;
and,
$A_x$ and $B_x$ are constants defining image edge regions (as shown in Figure 1).

The horizontal-difference measure $\Delta_x$ is thus a measure of the average difference between respective, vertically-averaged columns of pixels at equivalent horizontal positions in the left and right halves of the frame. Image edge regions, including the edges of constituent stereo images filling half of the frame, are prevented from contributing to the difference measure by suitable choice of the constants $A_x$ and $B_x$.

Similarly, the magnitudes of the differences between pairs of values from the column of average values C(*y*) that are separated by half the image height are evaluated and averaged in a vertical-difference averager (24) according to equation [4] below:

$$\Delta_y = G \times \Sigma\{C(y) - C(y + H/2)\} \div (H/2 - A_y - B_y + 1) \qquad [4]$$

Where: $\Delta y$ is an average vertical-difference measure;
The summation is made over the range: $A_y \le y \le (H/2 - By - 1)$;
and,
$A_y$ and $B_y$ are constants defining image edge regions (as shown in Figure 1).

The vertical-difference measure $\Delta_y$ is thus a measure of the average difference between respective, horizontally-averaged rows of pixels at equivalent vertical positions in the top and bottom halves of the frame. Image edge regions, including the edges of constituent stereo images filling half of the frame, are prevented from contributing to the difference measure by suitable choice of the constants $A_y$ and $B_y$.

A suitable value for the constant G is 8, for typical 8-bit pixel values; and, 10 is a suitable value for the constants $A_x$, $A_y$, $B_x$ and $B_y$.

When the whole frame is filled with a typical single image, it is unlikely that the left and right halves of the frame will be similar, and also unlikely that the top and bottom halves of the frame will be similar; both $\Delta_x$ and $\Delta_y$ can therefore be expected to be large.

If the frame is used for over-and-under transmission of the two constituent images of a stereoscopic image, the horizontal-difference measure can be expected to be large because the respective left and right halves of the constituent images are likely to be different. However, the vertical-difference measure is very likely to be small because the left-eye and right-eye views of a scene are acquired by cameras at the same height.

Alternatively, if the frame is used for side-by-side transmission of the two constituent images of a stereoscopic image, the vertical-difference measure can be expected to be large because the top and bottom halves of the constituent images are likely to be different. However, the horizontal difference measure is likely to be small - but not zero, because of the horizontal disparity between the left-eye and right-eye positions of objects intended to be portrayed in front of, or behind, the display.

Thus, provided the frame contains images having varying pixel values, it should be possible to detect whether or not side-by-side or over-and-under representation of stereoscopic is being used. However, if the pixel values do not vary over the image, perhaps following a fade to black, both difference measures will be zero and detection stereo images will not be possible. This difficulty can be avoided by adding a correction factor to the difference measures as will now be described.

The maximum pixel-value for each of the W columns of pixels is determined by a maximum value detector (25); and, the minimum value for each of the W columns of pixels is determined by a minimum value detector (26). The respective differences between these maxima and minima are then calculated by a subtractor (27) to give a set of W pixel-value range values according to equation [5] below:

$$\mathrm{Range}(x) = \{\mathrm{Max}(P(x, y)) - \mathrm{Min}(P(x, y))\} \qquad [5]$$

Where: $\mathrm{Max}(P(x, y)) = \mathrm{Max}\{P(x, 0), P(x, 1), P(x, 2), \dots P(x, H - 1)\}$; and,
$\mathrm{Min}(P(x, y)) = \mathrm{Min}\{P(x, 0), P(x, 1), P(x, 2), \dots P(x, H - 1)\}$

These range values are averaged over the frame width in an averager (28) to give an average column range value according to equation [6] below:

$$\mathrm{Range}_{Col} = (1/W) \times \Sigma\{\mathrm{Range}(x)\} \qquad [6]$$

Where: The summation is over the range $0 \le X \le (W - 1)$.

Analogous processing is applied to the H rows of pixel values to obtain an average row range value as follows. The maximum value of each of the rows of pixels is determined by a maximum value detector (29); and the minimum value of each of the rows of pixels is determined by a minimum-value detector (30). A subtractor (31) determines the set of H range values according to equation [7] below:

$$\text{Range}(y) = \{\text{Max}(P(x, y)) - \text{Min}(P(x, y))\} \qquad [7]$$

Where: $\text{Max}(P(x, y)) = \text{Max}\{P(0, y), P(1, y), P(2, y), \ldots P(W - 1, y)\}$; and,
$\text{Min}(P(x, y)) = \text{Min}\{P(0, y), P(1, y), P(2, y), \ldots P(W - 1, y)\}$

These range values are averaged over the frame height in an averager (32) to give an average row range value according to equation [8] below:

$$\text{Range}_{\text{Row}} = (1/H) \times \Sigma\{\text{Range}(y)\} \qquad [8]$$

Where: The summation is over the range $0 \leq y \leq (H - 1)$.

The two average range values, $\text{Range}_{\text{Col}}$ and $\text{Range}_{\text{Row}}$ are summed in an adder (33) to give an overall measure of the variation in pixel values for the image. The output from the adder (33) will be small when there is little variation in the values of pixels over the image; in this situation low values of $\Delta_x$ and $\Delta_y$ give unreliable indication of the presence of stereoscopic images, as explained above. The output from the adder (33) is input to a weighting function (34) to obtain dynamic range correction factor that is added to $\Delta_x$ and $\Delta_y$. This correction factor should be small when the range of pixel values sufficiently large to give representative values of $\Delta_x$ and $\Delta_y$ and become large otherwise. A suitable weighting function is:

$$\delta = J \times \exp(-(z/K)^2) \qquad [9]$$

Where: $\delta$ is the dynamic range correction factor to be added to $\Delta_x$ and $\Delta_y$;
z is the un-weighted input range value; and,
J and K are constants.

The value of J sets the maximum value of $\delta$ when the input range z is zero; a value of 120 has been found to be suitable. The value of K determines how rapidly the weighting decreases as the input range z increases; a value of 2048 has been found suitable.

Returning to Figure 2, the dynamic range correction factor output from the weighting function (34) is added to the horizontal difference measure $\Delta_x$ in an adder (35), and also added to the vertical difference measure $\Delta_y$ in and adder (36). When, as is usually the case, a sequence of images is being analysed, the output from the adders (35) and (36) are temporally filtered in respective temporal filters (37) and (38) that, typically, recursively combine the results from a number of images. The two filtered difference measures are compared with a common threshold value (39) in respective comparators (40) and (41) to provide binary TRUE or FALSE inputs to a logic block (42) that derives output 'side-by-side' and 'over-and-under' flags (43) and (44).

Frames carrying the two constituent images of a stereo image will usually result in one of the comparator outputs being TRUE and the being other FALSE. Frames carrying a single image will usually result in both comparators giving TRUE outputs because both the horizontal difference measure $\Delta_x$ and the vertical difference measure $\Delta_y$ are above the threshold. Thus the FALSE condition at the output of the comparator (40) is indicative of side-by-side constituent images; and the FALSE condition at the output of the comparator (41) is indicative of over-and-under constituent images.

The logic block (42) ensures that the output flags (43) and (44) are mutually exclusive, and provides additional temporal averaging when processing sequences of images. A suitable algorithm for this latter case is to count the number of frames for which each of the comparators (40) and (41) give FALSE outputs over, say, 200 frames and to set the output flag corresponding to the comparator giving the higher number of FALSE outputs exceeding a suitable threshold number, say 50. Thus if the comparator (40) gives a FALSE output for more than 50 frames in the last 200 frames, and the comparator (41) gives fewer FALSE outputs for these frames, then the side-by-side flag (43) is set. And, similarly if the comparator (41) gives a higher number of FALSE outputs exceeding 50 for these frames, and the comparator (40) gives a fewer number of FALSE outputs, then the over-and-under flag (44) is set. If neither comparator gives more than 50 FALSE outputs in the most recent 200 frames, then neither output flag is set.

This logical processing can be improved by making use of the $\Delta_x$ and $\Delta_y$ values from the vertical-difference averager (23) and the horizontal-difference averager (24) when neither of the comparators (39) and (40) gives more than 50 FALSE outputs in the most recent 200 frames. The $\Delta_x$ and $\Delta_y$ values can be summed respectively over these 200 frames and the respective summations compared both with each other and with a threshold value, say 14,000. If the lower sum is less than the threshold, the appropriate flag is set; neither flag is set if both sums exceed the threshold.

Other variations in this logic are possible, for example different thresholds can be set for the two comparisons, and the thresholds may depend on the currently detected flags so as to provide hysteresis that prevents a change in an output flag until a significant change in the measured horizontal or vertical difference values occurs.

The system shown in Figure 2 uses one row of vertically averaged pixel values R(x), and one column of horizontally averaged pixel values C(y) derived from all of the frame. Detection of side-by-side and over-and-under transmission of stereoscopic images can alternatively be achieved by analysing two rows of vertically averaged pixel values and two columns of horizontally averaged pixel values derived from separate averaging of half-frames as follows:

$$R_{Upper}(x) = (2/H) \times \Sigma P(x, y) \qquad [10]$$

Where: the summation is made over the upper half of the frame comprising the range $0 \leq y \leq (H/2 - 1)$.

$$R_{Lower}(x) = (2/H) \times \Sigma P(x, y) \qquad [11]$$

Where: the summation is made over the lower half of the frame comprising the range $(H/2) \leq y \leq H$.

$$C_{Left}(y) = (2/W) \times \Sigma P(x, y) \qquad [12]$$

Where: the summation is made over the left half of the frame comprising the range $0 \leq X \leq (W/2 - 1)$.

$$C_{Right}(y) = (2/W) \times \Sigma P(x, y) \qquad [13]$$

Where: the summation is made over the right half of the frame comprising the range $(W/2) \leq X \leq W$.

The presence of over-and-under stereoscopic images can be inferred when the correlation between $R_{Upper}(X)$ and $R_{Lower}(X)$ is high, and the correlation between $C_{Left}(y)$ and $C_{Right}(y)$ is low.

Similarly, the presence of side-by-side stereoscopic images can be inferred when the correlation between $C_{Left}(y)$ and $C_{Right}(y)$ is high, and the correlation between $R_{Upper}(X)$ and $R_{Lower}(X)$ is low.

The complexity of correlation processing can be avoided by forming average horizontal and vertical pixel value difference measures as follows:

$$\Delta_x' = G \times \Sigma\{C_{Left}(y) - C_{Right}(y)\} \div (H - A_y - B_y + 1) \qquad [14]$$

Where: $\Delta_x'$ is an alternative average horizontal-difference measure; and
The summation is made over the range: $A_y \leq y \leq (H - B_y - 1)$.
And:

$$\Delta_y' = G \times \Sigma\{R_{Upper}(x) - R_{Lower}(x)\} \div (W - A_x - B_x + 1) \qquad [15]$$

Where: $\Delta_y'$ is an alternative average vertical-difference measure;
The summation is made over the range: $A_x \leq X \leq (W - B_x - 1)$.
The presence of over-and-under stereoscopic images can be inferred when $\Delta_y'$ is low, and $\Delta_x'$ is high. Similarly, the presence of side-by-side stereoscopic images can be inferred when $\Delta_x'$ is low, and $\Delta_y'$ is high. As in the system of Figure 2, a dynamic range correction factor, derived from the range of values in the averaged rows and columns of pixel values can be added to the horizontal- and vertical-difference measures to avoid false detection in the absence of representative image data.

The invention can be applied to sets of values that describe any convenient image attribute at a respective set of pixel locations; or, to sets of combined pixel values where each member of the set is formed by combining the values for different image attributes at the same pixel location. The operations of taking averages and of taking differences may in appropriate cases be reversed in order. Typically luminance values are used but other pixel values may be employed. Images may be subsampled or oversampled prior to processing. Image-edge values, including values close to the horizontal or vertical centre lines of the image, may or may not be included in any of the summation and averaging processes. The invention can be applied to single frames or sequences of frames; of course the temporal filtering of horizontal difference values and the summation of values over multiple frames cannot be applied when processing unrelated images. The above description has been in terms of hardware blocks, other implementations, including processor-based implementations are possible, and will be apparent to the skilled person from the above description.

**Claims**

1. A method of detecting the presence of the two constituent images of a stereoscopic image within an image frame by analysis of columns of horizontally-averaged pixel values and rows of vertically-averaged pixel values.

2. A method according to Claim 1 in which the ordered set of values of a row of vertically-averaged pixels is analysed to detect the similarity of average values corresponding to respective image regions within the said frame horizontally separated by half the width of the said frame and the presence of a side-by-side arrangement of constituent images of a stereoscopic image is inferred from said similarity and/or in which the ordered set of values of a column of horizontally-averaged pixels is analysed to detect the similarity of average values corresponding to respective image regions within the said frame vertically separated by half the height of the said frame and the presence of over-and-under arrangement of constituent images of a stereoscopic image is inferred from said similarity.

3. A method according to Claim 2 in which the average difference between members of a set of values of a row or column of averaged pixel values is evaluated.

4. A method according to Claim 2 in which the correlation between the members of a set of values of a row or column of averaged pixel values is evaluated, preferably in which phase correlation is used.

5. A method according to Claim 1 in which a first row of vertically-averaged pixels is derived from the upper half of the said frame and compared with a second row of vertically-averaged pixels derived from the lower half of the said frame and the presence of over-and-under arrangement of constituent images of a stereoscopic image is inferred when these first and second rows of vertically-averaged pixels are found to be similar and/or in which a first column of horizontally-averaged pixels is derived from the left half of the said frame and compared with a second column of horizontally-averaged pixels derived from the right half of the said frame and the presence of side-by-side arrangement of constituent images of a stereoscopic image is inferred when these first and second rows of vertically-averaged pixels are found to be similar.

6. A method according to Claim 5 in which the average difference between respective members of a pair of rows of averaged pixels or between respective members of a pair of columns of averaged pixels is evaluated.

7. A method according to Claim 5 in which the correlation between two rows of averaged pixels or between two columns of averaged pixels is evaluated, preferably in which phase correlation is used.

8. A method according to any of Claims 2 to 7 in which a measure of similarity between pixel values or combinations of pixel values is biased in the direction of dissimilarity when a measure of the range of values within a row or column of pixel values or combinations of pixel values is small.

9. A method according to any of Claims 2 to 8 in which pixels close to the edge of the said frame are disregarded.

10. A method according to any of Claims 2 to 9 in which pixels close to the vertical centre line, or horizontal centre line of the said frame are disregarded.

11. A method of detecting in a processor the presence of the two constituent images of a stereoscopic image pair within an image frame in side-by-side or over-and-under arrangement comprising the steps of detecting the similarity of values corresponding to respective image regions within the said frame horizontally separated by half the width of the said frame; detecting the similarity of values corresponding to respective image regions within the said frame vertically separated by half the height of the said frame and inferring from said similarities the presence or not of side-by-side or over-and-under arrangements of constituent images of a stereoscopic image pair.

12. A method according to Claim 11 in which said similarities are weighted by a global measure of the similarity of values over the image frame.

13. Apparatus for detecting the presence of the two constituent images of a stereoscopic image pair within an image frame; the apparatus comprising a vertical averager operating on pixels or horizontal differences between pixels; a horizontal averager operating on pixels or vertical differences between pixels; a horizontal difference determinator for determining a difference between pixels or vertically averaged values separated horizontally by a characteristic horizontal distance which is preferably half the width of the said frame; a vertical difference determinator for determining a difference between pixels or horizontally averaged values separated vertically separated by a characteristic vertical distance which is preferably half the height of the said frame and a logic block serving to infer the presence or not of side-by-side or over-and-under arrangements of constituent images of a stereoscopic image pair.

14. Programmable apparatus programmed to implement a method according to any one of Claims 1 to 12.

15. A computer program product adapted to cause programmable apparatus to implement a method according to any one of Claims 1 to 12.

**Figure 1**

**Figure 2**